# EUROPEAN PATENT APPLICATION

(11) **EP 1 635 349 A2**
(43) Date of publication of application: **15.03.2006**
(21) Application number: 05255455.7
(22) Date of filing: 07.09.2005
(51) Int. Cl.: G11B 20/10

(54) **Combination recording apparatus for simultaneous recording and method thereof**

(30) Priority: 08.09.2004 KR 2004071577
(71) Applicant: Samsung Electronics Co., Ltd., Suwon-si, Gyeonggi-Do (KR)
(72) Inventor: Kim, Jin-Hwi, Suwon-si Gyeonggi-do (KR)
(74) Representative: Waddington, Richard

(57) **Abstract**

A combination recording apparatus for simultaneously recording and a simultaneous recording method. The combination recording apparatus includes a first recording section (110) provided in a first recorder (100) for recording an input video, a second recording section (210) provided in a second recorder (200) for recording the input video, a first controller (120) provided in the first recorder (100) for controlling the first recording section (110) to record the input video when a recording command is received, and a second controller (220) provided in the second recorder (200) for controlling the second recording section (210) to record the input video and transferring the recording command to the first controller (120) when a simultaneous recording command is received. Accordingly, the combination recording apparatus enables to the user to simultaneously record the input video in more than two recorders with easy and simple manipulation.

## Description

The present invention relates to a combination apparatus, and more specifically, to a combination apparatus that integrates more than two apparatuses operating independently.

A combination apparatus integrates more than two apparatuses in a single housing, which perform different functions and operate independently from each other. Typical examples of the combination apparatus include a combination of a mobile phone and a digital camera, a combination of a digital camera and a digital camcorder, and the like. The type of the combination apparatus tends toward diversity.

Apparatuses in the combination apparatus perform different functions independently from each other. When the combination apparatus operates, all of the apparatuses do not function simultaneously, but only one of the apparatuses functions in most cases. For example, given that a digital camera and a digital camcorder are combined together, only one apparatus, not both, can capture images at a time.

Such features of the combination apparatus are true to a combination recording apparatus integrating more than two recorders. To record a video at the combination recording apparatus, only one recorder in the combination recording apparatus can record the video.

Even when a user wants to record videos on different recording media using the recorders respectively, it is impossible to simultaneously record the videos on the recording media separately.

To address the disadvantages of the related art, the video is recorded on one of the recording media and then copied to another recording medium. Such a cumbersome manipulation causes inconvenience to the user and image deterioration due to the image copy between the recording media.

Additional aspects and/or advantages of the invention will be set forth in part in the description which follows and, in part, will be apparent from the description, or may be learned by practice of the invention.

The present invention has been provided to solve the above-mentioned and other problems and disadvantages occurring in the conventional arrangement.

The present invention provides a combination recording apparatus integrating more than two recorders and capable of simultaneously recording input videos on entire recording media, and a method for the simultaneous recording.

According to the present invention there is provided an apparatus and method as set forth in the appended claims. Preferred features of the invention will be apparent from the dependent claims, and the description which follows.

According to an aspect of the present invention, there is provided a combination recording apparatus in which a first recorder and a second recorder are integrated together, the apparatus comprising a first recording section provided in the first recorder for recording an input video; a second recording section provided in the second recorder for recording the input video; a first controller provided in the first recorder for controlling the first recording section to record the input video when a recording command is received; and a second controller provided in the second recorder for controlling the second recording section to record the input video and transferring the recording command to the first controller when a simultaneous recording command is received.

The combination recording apparatus may further comprise a switch which is provided in the second recorder and switches to output the input video to at least one of the first recording section and the second recording section. The second controller can control the switch to output the input video to the first and the second recording sections when the simultaneous recording command is received.

The second controller can control the second recording section to record the input video when the simultaneous recording command is received while the first recording section is already recording. The second controller can transfer the recording command to the first controller when the simultaneous recording command is received while the second recording section is already recording.

The control and the transfer at the second controller may be triggered when the simultaneous recording command is received or when a preset timer recording time arrives.

According to another aspect of the present invention, a simultaneous recording method of a combination recording apparatus in which a first recorder and a second recorder are integrated together, the first recorder comprising a first recording section and a first controller, and the second recorder comprising a second recording section and a second controller, comprises the steps of controlling, at the second controller, the second recording section to record an input video when a simultaneous recording command is received; transferring a recording command from the second controller to the first controller; and controlling, at the first controller, the first recording section to record the input video when the recording command is received.

The controlling of the second recording section may comprise the sub-step of controlling, at the second controller, a switch provided in the second recorder to output the input video to the first and second recording sections when the simultaneous recording command is received.

The control and the transfer at the second controller may be triggered when the simultaneous recording command is received or when a preset timer recording time arrives.

The first recorder can be an optical recorder, a magnetic recorder, a semiconductor recorder, a compact disk recorder (CDR), a digital video disk recorder (DVDR), a hard disk drive (HDD) recorder, a video cassette recorder (VCR), or a memory card recorder. The second recorder can be one of an optical recorder, a magnetic recorder, a semiconductor recorder, a CDR, a DVDR, a HDD recorder, a VCR, and a memory card recorder.

Additional and/or other aspects and advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a block diagram of a digital video disk recorder (DVDR) and video cassette recorder (VCR) combination apparatus according to an embodiment of the present invention;
FIG. 2 is a flowchart explaining simultaneous recording operations at the DVDR/VCR combination apparatus;
FIG. 3A through FIG. 3C depict a user interface screen displayed to facilitate the selection of a recording mode; and
FIG. 4 is a block diagram of a DVDR/VCR combination apparatus according to another embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

Reference will now be made in detail to the embodiments of the present invention, examples of which are illustrated in the accompanying drawings, wherein like reference numerals refer to the like elements throughout. The embodiments are described below to explain the present invention by referring to the figures.

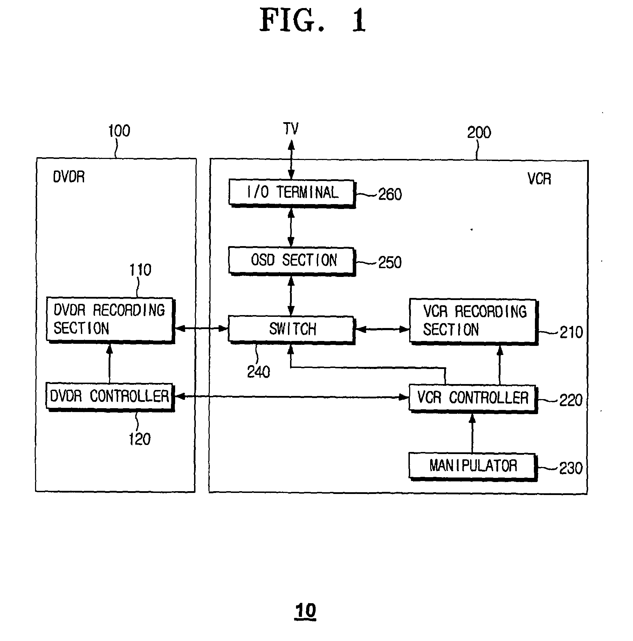

FIG. 1 is a block diagram of a digital video disk recorder (DVDR) and video cassette recorder (VCR) combination apparatus 10 capable of simultaneously recording according to an embodiment of the present invention. The DVDR/VCR combination apparatus, which is one of various combination recorders, combines a DVDR 100 and a VCR 200.

The DVDR 100 records an input video on a DVD. The DVDR 100 includes a DVDR recording section 110 and a DVDR controller 120.

The DVDR recording section 110 records an input video provided from a switch 240 of VCR 200, onto a loaded DVD, to be explained. The DVD could be loaded into the apparatus 10.

The DVDR controller 120 controls the recording operation of the DVDR recording section 110. As the DVDR controller 120 is able to communicate data with a VCR controller 220 which will be illustrated, the DVDR controller 120 can receive a control command from the VCR controller 220.

The VCR 200 records an input video on a tape. The VCR 200 includes a VCR recording section 210, the VCR controller 220, a manipulator 230, the switch 240, an on-screen display (OSD) section 250, and an input and output (I/O) terminal 260.

The VCR recording section 210 records an input video provided from the switch 240 onto a tape.

The VCR controller 220 controls the recording operation at the VCR recording section 210. The VCR controller 220, which is capable of communicating data with the DVDR controller 120, can transfer a control command to the DVDR controller 120.

The manipulator 230 is a user interface means to forward a user's manipulation command to the VCR controller 220. The manipulator 230 comprises a manipulation panel provided at the front part of the DVDR/VCR combination apparatus, and a remote controller operable at a distance.

The switch 240 switches to output the input video received from a TV being an external device, to the DVDR recording section 110 and/or the VCR recording section 210. The switch 240 can switch to output the input video to either the DVDR recording section 110 and/or the VCR recording section 210. The switch operation of the switch 240 is under the control of the VCR controller 220.

The OSD section 250 creates a user interface screen such as text information and menus, and displays the user interface screen on a TV screen. The I/O terminal 260 is connected with an external device such as a TV.

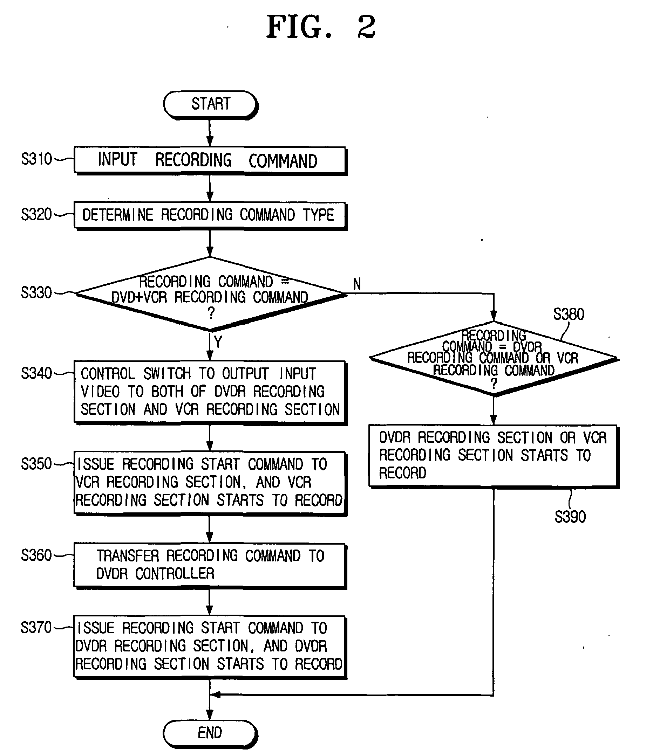

In reference to FIG. 2, detailed descriptions are provided for the simultaneous recording operations of the DVDR/VCR combination apparatus as illustrated in FIG. 1. FIG. 2 is a flowchart explaining the simultaneous recording operations at the DVDR/VCR combination apparatus.

When the user inputs a recording command through the manipulator 230 (S310), the input recording command is provided to the VCR controller 220. The VCR controller 220 determines the type of the received recording command (S320).

The user's recording command can be input at operation S310 by use of a manipulation button provided at the manipulator 230 or the user interface screen created at the OSD section 250, which will be illustrated in more detail.

The recording command is divided based on the recording mode into a DVDR recording command, a VCR recording command, and a DVDR+VCR recording command. The DVDR recording is carried out only at the DVDR 100, the VCR recording is carried out only at the VCR 200, and the DVDR+VCR recording is carried out at both the DVDR 100 and the VCR 200.

When it is determined that the recording command is the DVDR+VCR recording command (S330), the VCR controller 220 controls the switch 240 to output the input video to both the DVDR recording section 110 and the VCR recording section 210 (S340).

The VCR controller 220 issues a recording start command to the VCR recording section 210, and accordingly, the VCR recording section 210 starts to record the input video (S350) .

At the same time, the VCR controller 220 transfers the recording command to the DVDR controller 120 (S370). The DVDR 120 issues a recording start command to the DVDR recording section 110, and then the DVDR recording section 110 starts to record the input video (S370).

As both the DVDR recording section 110 and the VCR recording section 210 record the input video, the simultaneous recording is achieved.

In the event that the DVDR recording 110 is recording the input video when the DVDR+VCR recording command is input, operation S350 alone may be performed, skipping operations S360 and S370. If the VCR recording 210 is recording the input video when the DVDR+VCR recording command is input, it can be implemented skipping operation S350 and proceeding to operations S360 and S370.

When the DVDR+VCR recording command input at operation S310 is a timer-recording command, it can be implemented to execute operations S320 through S370 when a reserved time set for the timer recording arrives.

When it is determined that the recording command is the DVDR recording command or the VCR recording command (S380), either the DVDR recording section 110 or the VCR recording section 210 starts to record the input video (S390).

In particular, when the recording command is determined to be the DVDR recording command at operation S320, the VCR controller 220 controls the switch 240 to output the input video to the DVDR recording section 110. Upon receiving the recording command from the VCR controller 220, the DVDR controller 120 issues a recording start command to the DVDR recording section 110. Thus, the DVDR recording section 110 starts to record the input video.

In comparison, when the recording command is determined to be the VCR recording command at operation S320, the VCR controller 220 controls the switch 240 to output the input video to the VCR recording section 210. Next, the VCR controller 220 issues a recording start command to the VCR recording section 210, and then the VCR recording section 210 starts to record the input video.

The following provides further detailed descriptions on how to input the recording command. The recording command can be input by use of the manipulation button provided at the manipulator 230 or the user interface screen created at the OSD section 250 as mentioned above.

Furthermore, the manipulation button can be provided and used in three different manners. Firstly, three buttons including a 'DVD recording' button, a 'VCR recording' button, and a 'DVDR+VCR recording' button are provided at the manipulator 230 so that the user can select a proper button according the user's desired recording mode. Secondly, two buttons of a 'DVD recording' button and a 'VCR recording' button are provided at the manipulator 230. In this situation, the user needs to push both buttons in order to select the DVDR+VCR recording. Thirdly, only one 'recording' button is provided at the manipulator 230 and the multiple consecutive selections of the 'recording' button change the recording mode from 'DVD recording' → 'VCR recording' → 'DVDR+VCR recording' → 'DVD recording' → ... and so forth.

Otherwise, the user can choose a desired recording mode by use of the user interface screen, and input the recording command by use of the recording button of the manipulator 230.

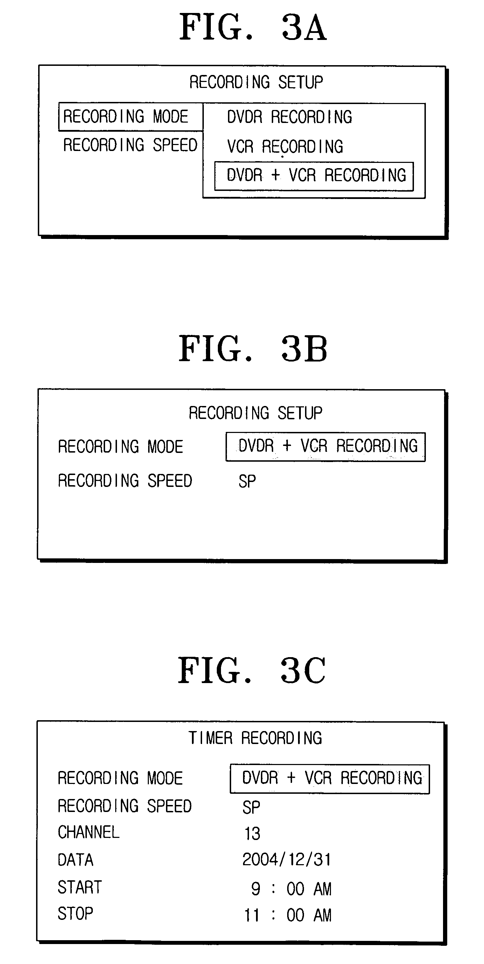

The recording mode can be set using the user interface screen in two ways. First, the user interface screen displays submenus of a selected menu item as shown in FIG. 3A so that the user can select a desired recording mode by moving a cursor by means of up, down, left, and right buttons provided at the manipulator 230. Secondly, The user interface screen displays changes of a menu item pointed by the cursor as shown in FIG. 3B. In this case, the user moves the cursor to the recording mode by controlling up and down buttons provided at the manipulator 230, and changes the recording mode by controlling left and right buttons, to thus select a desired recording mode. For example, in FIG. 3B, if the cursor points the DVDR+VCR recording and the user pushes the left and right buttons, the recording mode changes 'DVDR+VCR recording' → 'DVDR recording' → 'VCR recording' → 'DVDR+VCR recording' → ... and so forth in a recursive order. Hence, the user can select his/her desired recording mode.

Meanwhile, the recording mode may be set when establishing the timer recording. FIG. 3C depicts a user interface displayed for setting the timer recording. The recording mode is selected through a recording mode menu item as explained above in reference with FIG. 3B.

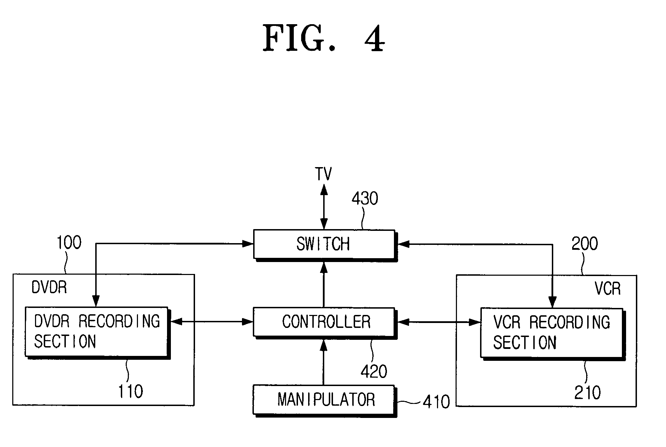

The following describes a DVDR/VCR combination apparatus capable of simultaneous recording according to another embodiment of the present invention in relation with FIG. 4. FIG. 4 is a block diagram of the DVDR/VCR combination apparatus according to another embodiment of the present invention.

Comparing with the DVDR/VCR combination apparatus as shown in FIG. 1, the DVDR/VCR combination apparatus as shown in FIG. 4 includes a unified controller 420. The controller 420 controls the recording at the DVDR recording section 110, the recording at the VCR recording section 210, and the switching at the switch 430.

Other blocks 110, 210, 410, and 430 are not described in detail as they have functions similar to the blocks as shown in FIG. 1. Note that the manipulator 410, the controller 420, and the switch 430 may be realized within the DVDR 100 or the VCR 200.

Hereinafter, the simultaneous recording operations of the DVDR/VCR combination apparatus of FIG. 4 are further detailed.

When the user inputs the DVDR+VCR recording command through the manipulator 410, the input DVDR+VCR recording command is provided to the controller 420. The controller 420 controls the switch 430 to output the input video from a TV to both of the DVDR recording section 110 and the VCR recording section 210.

The controller 420 issues the recording start command to the DVDR recording section 110 and the VCR recording section 210, and accordingly, the DVDR recording section 110 and the VCR recording section 210 start to record the input video. Therefore, simultaneous recording is achieved.

In the event that the DVDR recording section 110 is already recording any other input video when the DVDR+VCR recording command is input, the controller 420 may issue the recording start command only to the VCR recording section 210.Similarly, when the DVDR+VCR recording command is input while the VCR recording section 210 is already recording, the controller 20 may issue the recording start command only to the DVDR recording section 110.

By way of example, the combination recording apparatus consisting of the DVDR and the VCR simultaneously recording the input video have been illustrated. Note that recorders integrated in the combination recording apparatus are not limited to these illustrative embodiments of the present invention. The combination recording apparatus can selectively integrate an optical recorder, a magnetic recorder, a semiconductor recorder, and the like.

The optical recorder may be a compact disk recorder (CDR) or a DVDR. The magnetic recorder may be a hard disk driver (HDD) recorder or a VCR. The semiconductor recorder may be a memory card recorder.

Note that the same type of recorders can be integrated in the combination recording apparatus. For example, the present invention is applicable to the combination recording apparatus having two DVDRs.

In addition, the number of recorders integrated in the combination recording apparatus is not limited. For example, more than three recorders can be integrated to the combination recording apparatus according to embodiments of the present invention. If a DVDR, a VCR, and a HDD recorder are integrated together, the inventive concept of the present invention can be realized in a combination recording apparatus to enable the simultaneous recording of the input video at the three recorders.

The present invention employs any external device providing an input video to the combination recording apparatus. The external device may be a TV, a set-top box, a digital camcorder, a digital camera, and the like.

In light of the foregoing as illustrated above, the present invention enables the combination recording apparatus integrating more than two recorders to simultaneously record an input video. Thus, the input video is recorded on more than two recording media with easy and simple manipulation. Furthermore, the user does not have to record the input video on one recording medium and copy the recorded video on another recording medium in order to record the input video on more than two recording media. Also, the recorded video does not deteriorate due to the video copy.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A combination recording apparatus in which a first recorder (100) and a second recorder (200) are integrated together, comprising:
a first recording section (110) provided in the first recorder (100) for recording an input video;
a second recording section (210) provided in the second recorder (200) for recording the input video;
a first controller (120) provided in the first recorder (100) for controlling the first recording section (110) to record the input video when a recording command is received; and
a second controller (220) provided in the second recorder (200) for controlling the second recording section (210) to record the input video and transferring the recording command to the first controller (120) when a simultaneous recording command is received.

2. The combination recording apparatus of claim 1, further comprising a switch (240) which is provided in the second recorder (200) and switches to output the input video to at least one of the first recording section (110) and the second recording section (210),
wherein the second controller (220) is operable to control the switch (240) to output the input video to the first and the second recording sections (110,210) when the simultaneous recording command is received.

3. The combination recording apparatus of claim 1 or claim 2, wherein the second controller (220) is operable to control the second recording section (210) to record the input video when the simultaneous recording command is received while the first recording section (110) is already recording, and
the second controller (220) is operable to transfer the recording command to the first controller (120) when the simultaneous recording command is received while the second recording section (210) is already recording.

4. The combination recording apparatus of any one of claims 1 to 3, wherein the second controller (220) is operable such that the control and the transfer at the second controller (220) are triggered when the simultaneous recording command is received or when a preset timer recording time arrives.

5. The combination recording apparatus of any preceding claim, wherein the first recorder (100) is one of an optical recorder, a magnetic recorder, a semiconductor recorder, a compact disk recorder (CDR), a digital video disk recorder (DVDR), a hard disk drive (HDD) recorder, a video cassette recorder (VCR), and a memory card recorder, and
the second recorder (200) is one of an optical recorder, a magnetic recorder, a semiconductor recorder, a CDR, a DVDR, a HDD recorder, a VCR, and a memory card recorder.

6. A simultaneous recording method of a combination recording apparatus in which a first recorder (100) and a second recorder (200) are integrated together, the first recorder (100) comprising a first recording section (110) and a first controller (120), and the second recorder (200) comprising a second recording section (210) and a second controller (220), comprising the steps of:
controlling, at the second controller (220), the second recording section (210) to record an input video when a simultaneous recording command is received;
transferring a recording command from the second controller (220) to the first controller (120); and
controlling, at the first controller (120), the first recording section (110) to record the input video when the recording command is received.

7. The simultaneous recording method of claim 6, wherein the controlling of the second recording section (210) comprises the sub-step of controlling, at the second controller (220), a switch (240) provided in the second recorder (200) to output the input video to the first and second recording sections (110,210) when the simultaneous recording command is received.

8. The simultaneous recording method of claim 6 or claim 7, wherein the control and the transfer at the second controller (220) are triggered when the simultaneous recording command is received or when a preset timer recording time arrives.

9. The simultaneous recording method of any one of claims 6 to 8, wherein the first recorder (100) is one of an optical recorder, a magnetic recorder, a semiconductor recorder, a compact disk recorder (CDR), a digital video disk recorder (DVDR), a hard disk drive (HDD) recorder, a video cassette recorder (VCR), and a memory card recorder, and
the second recorder (200) is one of an optical recorder, a magnetic recorder, a semiconductor recorder, a CDR, a DVDR, a HDD recorder, a VCR, and a memory card recorder.

10. A simultaneous recording method comprising:
controlling, at a first controller (120), a first recording section to record an input video when a simultaneous recording command is received,
transferring the simultaneous recording command from the first controller (120) to second controller (220), and
controlling at the first and second controllers (120,220), the first and second recording sections (110,210) to record the input video when the simultaneous recording command is received.

11. A combination recording apparatus in which recorders including a first through nth recorder are integrated together, comprising:
a first recording section (110) provided in the first recorder (100) for recording an input video;
a second through nth recording section provided in each respectively numbered recorder for recording the input video;
a first controller (120) provided in the first recorder (100) for controlling the first recording section (110) to record the input video when a recording command is received, and
an nth controller provided in the nth recorder for controlling the nth recording section to record the input video and transferring the recording command to the (n-1) through first controllers when a recording command is received.
